Europäisches Patentamt

European Patent Office

Office européen des brevets

(11) Publication number: **0 051 027**
**B1**

(12) EUROPEAN PATENT SPECIFICATION

(45) Date of publication of patent specification: 24.04.85   (51) Int. Cl.⁴: **B 29 D 11/00**

(21) Application number: 81401666.3

(22) Date of filing: 22.10.81

(54) **Molded toric contact lenses.**

(30) Priority: 23.10.80 US 199780

(43) Date of publication of application:
05.05.82 Bulletin 82/18

(45) Publication of the grant of the patent:
24.04.85 Bulletin 85/17

(84) Designated Contracting States:
AT BE CH DE FR GB IT LI LU NL SE

(56) References cited:
DE-C-1 504 512
US-A-2 728 106
US-A-3 273 204
US-A-3 816 571
US-A-3 925 178
US-A-4 208 364
US-A-4 208 365

(73) Proprietor: **POLYMATIC INVESTMENT
CORPORATION N.V.
Pietermaai 16A
Curaçao Netherlands Antilles (NL)**

(72) Inventor: **Noble, Eric
43 Mark Drive
Smithtown New York 11787 (US)**

(74) Representative: **Hud, Robert et al
Cabinet COLLIGNON 6, rue de Madrid
F-75008 Paris (FR)**

## Description

This invention relates to the manufacture of plastic contact lenses having optical surfaces, at least one surface being a toric surface, and having prism ballast and cylinder. Apparatus and process for making such lenses are also disclosed.

Toric contact lenses were first introduced by Stimpson in 1950 while the toric base contact lens was described in 1952 and 1953 by Schapero and Baglien. Prior art procedures for the manufacture of toric contact lens are time-consuming and fairly expensive and involve a considerable amount of hand finishing. Moreover, the apparatus used to fabricate such lenses are often elaborate and difficulty is encountered to achieve reproducible results. Illustrative patents include U.S. Pat. Nos. 3,079,737; 3,344,692; 3,482,906; 3,535,825; 3,623,800 and 3,950,082.

Contact lenses may be prepared by a casting method in order to reduce or eliminate costly machining and polishing of the lens as described in U.S. Patent No. 4,121,896, issued October 24, 1978 in the name of T. H. Shepherd. According to the process described in this United States patent, complementing replica male and female mold members each having an optical molding surface are prepared by injection molding of a plastic composition in the master mold pairs. The plastic mold members are then used to mold contact lenses, one of the molding surfaces being provided with a flexible circumferential rim which defines the periphery of the resulting lens. The lens-forming material which will constitute the lens is charged into the female mold member or portion. The complementing male member or portion is brought into contact with the female mold member so that the flexible rim portion is seated on the opposite molding surface. During molding the lens-forming material contracts causing the flexible rim to flex whereby the two mold members move towards each other. Once the molding cycle is completed the mold members are separated and the resulting contact lens is removed in a condition ready for use, except for cleaning and perhaps a buffering of the lens edge.

A toric lens comprises two basic parts namely, a cylinder to correct astigmatism of the eye and prism ballast for ensuring positional stability when placed on the cornea. Non-astigmatic lenses do not have such a requirement and the lens is allowed to rotate freely upon the layer of tears carrying it. Toric lenses, on the other hand, require proper, rather precise, positioning on the eye. One procedure to achieve lens stability is to remove a small portion, e.g., 1 to 1.5 mm, of an outer chord of the contact lens (generally about 14 mm in diameter). This is called truncation. Opposed parallel clippings are called double truncations. Another means of achieving positional stability to a toric contact lens is to provide a somewhat larger mass of plastic material at or proximate an edge of the lens so that, in use, when the lens rotates this heavier edge will gravitate towards the bottom of the axis of rotation, i.e., the lower eyelid, and serve to stabilize the lens on the eye. This is known in the art as prism ballast.

A method for molding toric contact lenses is described in United States Patent 4,208,365, issued June 17, 1980 in the name of Robert J. LeFevre in which, like the Shepherd patent mentioned above, a mold system comprised of a pair of mold members is used to cast the lens, the desired toric optical surface being achieved by distorting the optical molding surface of one of the flexible mold members used to mold the lens. Distortion of the member is induced by tensioning means such as a torque ring surrounding the mold part to achieve the desired configuration. The mold system containing lens-forming material is then closed by positioning the mold members in lens-forming relationship with each other, the principal longitudinal axis of curvature of each mold member being in alignment. The patentee's casting technique produces the cylinder feature of the cast toric contact lens; however, there is no significant accommodation for positionable stability. Prism may be produced afterwards by edge finishing the toric contact lens on an eccentric lathe mandrel that is a costly and time-consuming procedure.

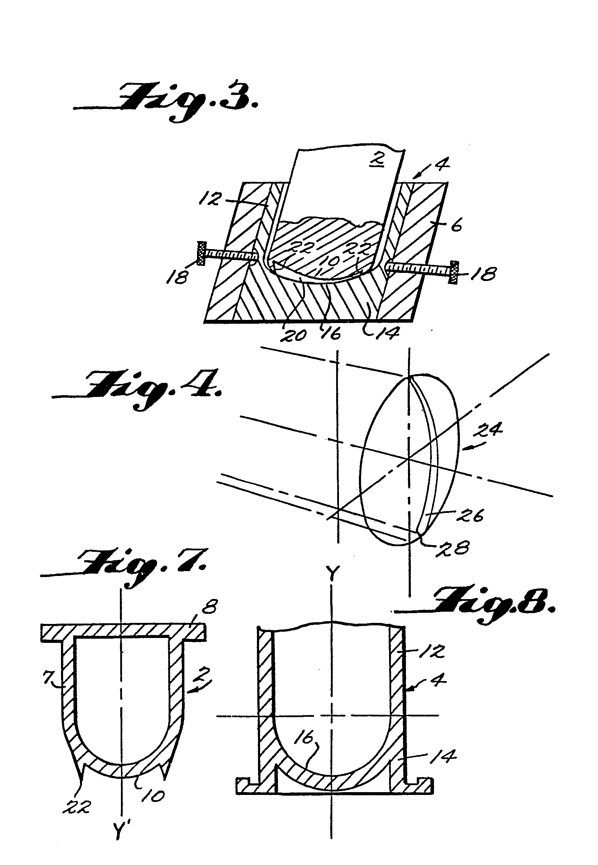

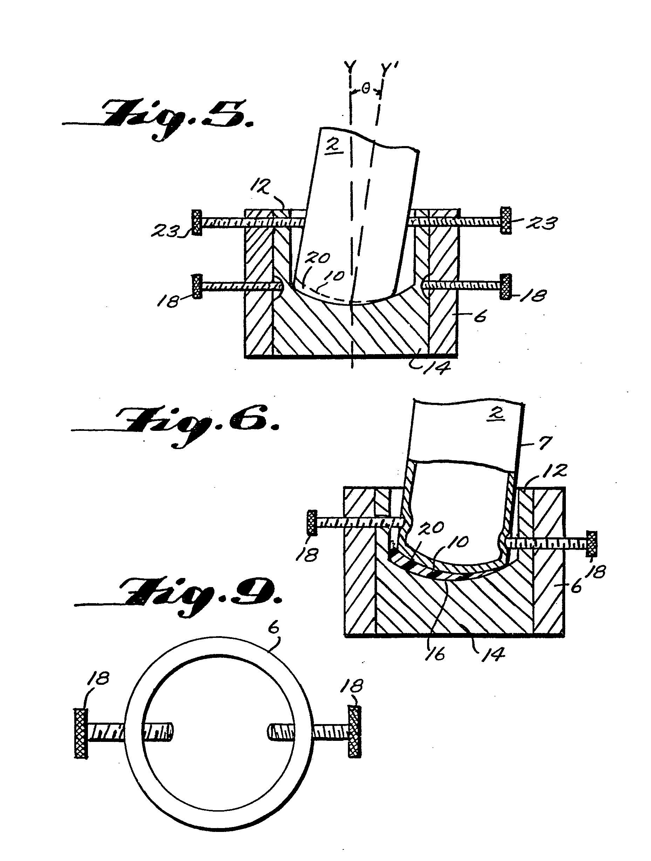

U.S. Patent 2 728 106 describes means for casting plastic lenses from resinous materials and, according to a form of embodiment shown at Figure 4, proposes for obtaining a lens presenting an amount of prism to use, as a support for a lower mold half, a peripheral inner shoulder of a hollow cylindrical supporting member of which the axis is formed at a predetermined angle with respect to the longitudinal axis of the supporting member. The upper mold half bears on a plane shoulder of the supporting member and an angle is thus obtained between the longitudinal axes of the molding surfaces.

U.S. Patent 3 723 204 describes a lens molding device comprising two die housings which during molding are brought together along a common axis. Each housing has a bore for the reception of a lens molding die, the axis of which bore is offset in relation to said common axis and one of the housings is mounted in a frame for rotation about said common axis whereby the angle between the axes of the bores in the die housings, and hence between the axes of dies positioned therein, can be varied by rotation of said housing in the frame.

One object of the invention is to provide a method for molding a plastic toric contact lens having prism ballast and cylinder, the amount of prism ballast being adjustable.

Another object of the invention is to provide molding apparatus and methods using such apparatus for fabricating toric contact lenses having predetermined prism ballast and cylinder at relatively low cost without the need for extensive and expensive manual finishing operations.

Another object of the invention is to provide a mold assembly comprised of lens-forming mold members, a first mold member having an optical concave toric molding surface, a second mold member having an optical convex molding surface, and the principal longitudinal axes of curvature of said molding

2

surfaces being maintainable such as to form an angle θ when said mold members are in lens-forming relationship with each other.

Another object of the present invention is to produce a prism ballast toric-shaped contact lens, hard or flexible, by a casting method in a closed mold system which compensates for shrinkage that occurs during polymerization or vulcanization of the lens-forming material used to make the lens.

It is also an object of this invention to provide a method for producing cast toric lenses in a closed mold system, such lenses having positionable stability and power as well as the desirable optical and fitting characteristics of machined and polished toric lenses.

These and other objects will be apparent from the following description.

The present invention is concerned with apparatus for the manufacture of toric contact lenses and to methods utilizing such apparatus in the production of such lenses.

According to the invention there is provided a process for producing a contact lens having a front convex optical surface and a back concave optical surface, one of said optical surfaces being a toric optical surface, and prism ballast, in a mold assembly comprised of a first mold portion including a hollow cylindrical portion with an open upper end and a closed lower end in the shape of a concave optical molding surface and a second mold portion including a cylindrical portion terminating in a convex optical molding surface and whose cross-sectional outer diameter is substantially smaller than the internal diameter of the said hollow cylindrical portion, one of said optical molding surfaces being a toric optical molding surface and each of said molding surfaces having a principal longitudinal axis of curvature, which comprises charging a contact lens-forming material on to the molding surface of said first mold portion, closing the mold assembly by positioning said second mold portion in touching and lens-forming relationship with said first mold portion and subjecting said lens-forming material to activating conditions for a period of time sufficient to produce said contact lens, characterized in that said second mold portion and said first mold portion in such lens-forming relationship are adjusted to form an angle θ of about 2 degrees to about 8 degrees, said angle θ being defined by the principal longitudinal axis of curvature of said first molding surface and said second molding surface, thereby producing a toric contact lens which exhibits cylinder power and prism ballast.

According to another aspect of the invention there is provided a contact lens mold assembly for casting toric contact lenses possessing significant cylinder power comprises (i) a male mold portion including a substantially cylindrical support portion and a convex molding surface having a principal longitudinal axis, said convex molding surface having a predetermined curvature to form a concave optical surface of said desired contact lens; (ii) a female mold portion including a concave molding surface having a principal longitudinal axis, said female molding surface having a predetermined curvature to form a convex optical surface of said desired contact lens, said female portion comprising a hollow cylindrical portion having an open upper end and a closed lower end for receiving the cylindrical portion of said male mold portion; (iii) said male mold portion and/or said female mold portion being flexible and constructed of thermplastic material; (iv) the cross-sectional outer diameter of the cylindrical support portion of said male mold portion being substantially smaller than the internal diameter of the hollow cylindrical portion of said female mold portion; (v) adjustment means operatively associated and in contact with a flexible, thermoplastic mold portion for flexing the optical surface thereof and imparting a predetermined toric surface thereto, and is characterized in that means are provided to maintain said male mold portion and said female mold portion in a fixed positional relationship at an angle θ, said angle θ being of about 2 degrees of about 8 degrees and being the angle formed by the principal longitudinal axes of said male mold portion and said female mold portion. The optical molding surfaces can be spherical or aspherical. The inner diameter of said cylindrical support segment (of the female mold member) is somewhat larger than the external diameter of said hollow cylindrical support segment (of the male mold member) so that there is sufficient clearance for the male support segment to be insertable into the female cylindrical support segment to obtain the desired angle θ and to permit lens-forming material to flow out between the two segments and/or otherwise be removed. The clearance, however, should not be so great as to permit the two principal axes to be non-aligned to a significant degree which would adversely affect the optical characteristics of the lens to be produced. In another embodiment the receiving mold component has a hollow cylindrical support segment or wall that is present at a selected angle so that the lens-forming material between the male and female mold portions is compressed and positioned at a predetermined angle θ.

In preferred embodiments one of the molding surfaces is provided with a flexible circumferential rim preferably integral with one of the optical molding surfaces which in the practice of the invention will define the periphery or edge of the resulting toric contact lens. As indicated in the background section above, during the molding operation, the lens-forming material contracts (especially during addition or condensation reactions) causing the flexible rim to flex whereby the two mold members move toward each other. For further details of flexible rim construction, materials, etc., one is referred to U.S. Patent No. 4,212,896 and 4,208,365, the disclosures of which are fully incorporated by reference as if set out in full text. Means can be provided to effect a predetermined or measured stress or force on a flexible mold portion, be it the female portion or the male portion, preferably on the female portion. Such means can be illustrated by various tension-creating devices, e.g. spring loader plunger in which the plunger creates a predetermined force on the wall of a flexible mold member thereby causing its optical surface to assume the desired toric configuration; flexible closed spring which preforms the same function; a circumferential

3

torque ring which applies pressure to a flexible mold portion, the torque ring having adjustable impingement means such as screws or the like for deforming the flexible mold portion into the desired toric configuration. Desirably there are at least two impingement means but there can be more, e.g., 3 or 4. Any other adjustment means can be employed to place a stress on the flexible mold whereby its molding surface is deformed to a predetermined toric configuration. Information regarding the fabrication and composition of the mold components as well as method of flexing one of them and achieving a toric surface on the contact lens are described in United States Patent 4,208,365, issued June 17, 1980, the disclosure of which is fully incorporated by reference as if set out in full text.

Figure 1 is an elevated perspective view of the lens mold system and torque ring in position about the lower (female) portion of said system.

Figure 2 is a plan cross-sectional view of a lens mold system in a closed position, the male mold member being provided with a cylindrical support segment having an optical molding surface attached circumferentially around the lower portion of said support segment and a circumferential flexible rim around said optical molding surface as disclosed in U.S. Patent No. 4,208,365, issued June 17, 1980, a circumferential torque ring in position applying a shaping force to the female mold member, and the male mold member and female mold member forming an angle θ.

Figure 3 is a plan cross-sectional view of still another lens mold system in the closed position in which the side walls of the female mold member are set a predetermined angle to receive the inserted male mold member, the two members forming the angle θ.

Figure 4 is an elevated perspective view of a molded toric contact lens, partially broken away, having a prism ballast at the lower portion thereof.

Figure 5 is a plan cross-sectional view of another lens mold system in the closed position; the circumferential torque ring in position applying a shaping force to the female mold part; the support segment of the male mold member inserted into the hollow cylindrical support segment of the female mold member at an angle θ; and means to maintain (as well as to adjust) angle θ at a preset value.

Figure 6 is a plan cross-sectional view of a lens mold system in the closed position; the circumferential torque ring positioned and applying a shaping force to the flexible male mold member.

Figures 7—8 are vertical cross-sectional views of the mold members forming the mold assembly used in U.S. 4,208,365 for producing contact lenses and with modification can be used in certain embodiments of the present invention.

Figure 9 is a top planar view of the circumferential torque ring.

The present invention, in its preferred aspect, employs a flexible female mold portion to provide the finished lens with a toric configuration on the front or anterior optical surface. The desired amount of prism ballast, customarily measured in diopters, is imparted to the finished molded lens by inserting one of the mold parts into the other mold part so that the desired angle θ is subtended by the principal longitudinal axis of curvature of each molding surface. This constitutes one adjustment of the novel molding process. The angle θ, in effect, governs the amount of prism ballast. Thus, a value of about three degree (3°) for the angle θ in the working examples resulted in toric lenses having a prism of about 0.5 diopter while an angle θ of 6° resulted in a prism of about 1.5 diopters.

Prism ballast indicates a weighted portion of the produced lens allowing for rotation on the eye of the wearer. Gravity correctly positions the lens. While "prism" or "prism ballast" is an indication of weight or mass, the thickening of the lens causes diffraction of light rays passing through the thickening area. This diffraction is measured on a Vertexometer which gives a reading in diopters. Thus, measurement of prism in diopters is an indirect measurement of the weight of the prism.

A second adjustment in the novel molding process provides for the required configuration of the optical molding surface of the flexible female mold member, for example, by impinging two opposed set screws into contact with the lower portion of this mold member, thus distorting the female optical molding surface and achieving the required toricity for the molded lens. While there are numerous variations possible as to this second adjustment relative to the first, for purposes of the following description it will be assumed that the impingement or "flexing" of the lower mold portion and the angle θ achieved by "tilting" one of the mold parts with respect to the other are both in the same plane.

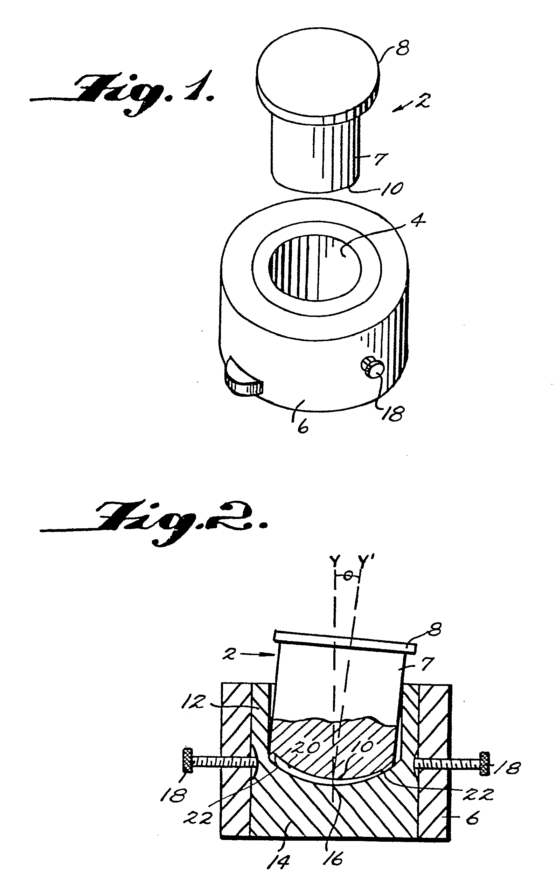

As shown in Figures 1 and 2, the mold comprises a male mold member 2 which may be of a flexible or rigid material, a flexible female mold member 4 and a circumferential torque ring 6. Male mold member 2 includes a substantially cylindrical support segment 7 having, optionally, attached to the upper end thereof a flexible rim 8. In one embodiment, cylindrical support segment 7 is hollow as shown. Support segment 7 is closed by optical molding surface 10 circumferentially attached to the bottom of support segment 7. The curvature of molding surface 10 is selected in order to correspond with the optical requirements of the lens to be produced. The curvature may be entirely spherical, aspherical or combinations of both. Materials for constructing the mold parts are well documented in the literature, e.g., U.S. Patent No. 4,121,896, the disclosure of which is hereby incorporated by reference as if set out in full text. Flexible female mold member 4 includes a cylindrical support segment or wall 12 set in a base 14 set circumferentially thereto and an optical molding surface 16 set internally in cylindrical support segment 12. The internal diameter of female support segment 12 is somewhat larger than the external diameter of male support segment 7 to properly accommodate the desired angle θ which, for example, in a desirable embodiment can be in the range of from about 2° to about 8°. As with the male molding surface 10, the curvature of female molding surface 16 is initially predetermined, and in operation can be varied in order to provide female molding surface 16 with the desired toric configuration. The principal longitudinal axis of curvature of female mold member 4 is the y axis and the principal longitudinal axis of curvature of male mold member 7 is the y' axis. The angle formed by these two axes, as illustrated previously, is θ.

The circumferential torque ring 6 is provided with two opposing set screws 18, in the embodiment illustrated, which when rotated inwardly, impinge on and deflect flexible female mold member 4. The torque ring 6 has an internal diameter which is slightly larger than the external diameter of cylindrical support segment 12 so that ring 6 may be conveniently removed and attached to female mold member 4 or removed from one mold member to another. The ring is preferably fabricated from rigid material such as metal, brass or the like.

During the operation of the novel process in a first adjustment the configuration of the lower portion of the female mold portion is adjusted by impinging the set screws on the mold, then the lens-forming material 20 which will eventually constitute the contact lens per se is placed into the female mold portion. Support segment 7 of male mold portion 2 is inserted into support segment 12 of female mold portion 4 and any excess lens-forming material 20 is squeezed out between the annular-like space between the two mold portions. It will be understood that in the embodiment shown in the Figures no runoff channels in the mold portions are shown or provided. Providing molds with such channels or other means for permitting excess lens-forming material to be removed is within the scope of the present invention.

In a preferred embodiment shown in Figures 2 and 3, the male mold portion 2 is provided with a circumferential flexible rim 22 around male molding surface 10. When the male mold portion 2 is urged against molding surface 16 of the female mold portion 4 the flexible rim 22 moves inwardly towards its principal longitudinal axis thus defining the edge of the lens thus molded. In a further embodiment not shown, female molding surface 16 (rather than male molding surface 10) is provided with the circumferential flexible rim 22. In a broad aspect of the invention neither the female molding surface nor the male molding surface is provided with a circumferential flexible rim. Toric lenses thus prepared may have undesirable flashing or excess molded material at their periphery which can be removed by conventional means, e.g., machining and/or polishing operations. It is further understood that various means, not shown in Figures 2—3, can be employed to retain the mold members in a fixed closed position thus preventing angle θ from varying from its preset value, e.g., retaining the mold system in a press or vise so as to prevent movement of the mold members during the lens-forming operation.

Figure 3 illustrates another embodiment of the invention in which the male mold member 2 is inserted at a predetermined angle into the female mold portion. It will be understood that adjustment means (not shown) may be provided to further vary the angle θ of insertion. In a further embodiment the angle θ is predetermined and "complementing" mold pair portions are employed in which male mold portion 2 slidably fits into female mold portion 4.

The process of molding is described in detail in U.S. Patent 4,208,365, the disclosure of which is fully incorporated by reference as if set out in full text. During the molding operation, the lens-forming material may contract and the contraction may be as much as 20% of its volume originally present between the molding surfaces. If desired, slight external pressure can be applied, desirably on the male mold portion, to ensure that the molding surfaces do remain in contact with the lens-forming material during contraction. However, the application of such external pressure is optional and, while in certain cases may give rise to improved results, the operation of the processes generally will proceed without added external pressure. After the molding step is completed, the molds are separated and the lens 24 shown in Figure 4 so produced is removed from the mold in a condition ready to use except for cleaning and perhaps a buffering of the edges. The optical surfaces of the lens are in their desired state.

As shown in Figure 4 the lower portion of the lens 24 is thicker than the upper portion of the lens thus showing the prism ballast obtained by the practice of the invention. Included within the invention is the provision of single truncation lens 28 although a double trucation is also contemplated. Truncation is accomplished by mechanically removing a small portion of the lens defined by a portion of the outside radius of the lens and a chord between two points.

The radius of the female mold portion 4 is adjusted by placing it into the circumferential torque ring 6 and adjusting the opposing set screws. The female mole member provides an optical surface to the resulting lens and a mold is selected or fabricated having the desired radius. The female mold portion 4 and attached circumferential torque ring assembly 6 are placed into a Keratometer and the set screws 18 are adjusted, optionally using a micrometer or other means, to vary the radius of the female mold portion 4 in both the horizontal and vertical plane with respect to the finished lens. As an example, starting with a spherical radius of 8.00 mm for the female mold surface 16, the mold portion 4 plus torque ring assembly 6 are placed in a Keratometer, the set screws 18 may be tightened to impinge on the female mold portion 4 to flatten the horizontal radius, to say 8.10 mm and steepen the vertical radius, to say 7.90 mm. Thus using predetermined radii in conjunction with a known base curve radius will result in known horizontal and vertical powers. The greater the radii differential the greater the difference between horizontal and vertical powers, hence the greater the cylinder.

Another embodiment of the invention is shown in Figure 5 which is similar to Figure 2. In Figure 5, adjustable screw means 23 are employed to secure male mold portion 2 in a fixed position once the desired angle θ is attained.

In another embodiment of the invention as shown in Figure 6 the male mold portion 2 is flexible and produces a toric configuration on the base or posterior surface 10 of the contact lens. The mold and molding procedure operates in substantially the same manner, subject to some minor variations, as will be apparent from the above description with respect to Figures 2 and 3.

It will be understood that the number and placement of adjusting screws about the circumference of torque ring 6 may be varied depending upon the desires of equipment design and the exact shape of the lens to be fabricated. For convenience, two screws 18 are illustrated, one positioned directly across from the other.

The molds are themselves preferably manufactured from thermoplastic materials, for example, low density polyethylene or polypropylene. These and other suitable materials are described in U.S. Patents 4,208,365 and 4,121,896, the disclosures of which are fully incorporated herein by reference as if set out in full text.

The process of the invention is not limited to soft plastic contact lenses, i.e., hydrogels in their hydrated state, although these are preferred articles. Also included are the hard or rigid contact lenses as well as flexible, hydrophobic contact lenses.

The novel process results in advantages over prior art methods in that a toric lens is cast directly from the desired lens-forming material; polishing of the optical surfaces is not required; only minimum finishing of lens edges may be required; and the overall manufacturing is far less labor intensive than with prior procedures, e.g., lathe procedure. More importantly, by the practice of the invention there is obtained, in an economic manner, a wide variety of toric contact lenses which exhibit a wide range of cylinder powers and significant positional stability in the eye of the wearer, i.e., prism ballast, previously available if at all by costly and time-consuming machining and polishing techniques.

The design of the lens produced by the invention is not restricted to any particular set of parameters. Both anterior and posterior optical surfaces of the lenses may consists of aspherical curves. The central portion of the lens may consist of spherical curves on either or both the anterior and posterior surface, and the periphery of the anterior surface may consist of a steeper or flatter spherical curve, and the periphery of the posterior surface may be aspheric to achieve a combination of improved fitting characteristics.

Any lens-forming material can be employed in the novel process to fabricate contact lenses which have at least one surface which is toric in configuration. Such materials may be hydrophilic, or hydrophobic, or mixtures of both. The resulting contact lenses may be hard lenses as exemplified by the rigid acrylic plastics, most notably poly(methy methacrylate); or such contact lenses may be flexible, hydrophobic lenses as exemplified by the unsubstituted and fluoro-substituted polyethylenes, the silicone elastomers, etc.; or such contact lenses may be the so-called hydrophilic lenses desirably having a three-dimensional structure such as polymers of 2-hydroxyethyl methacrylate; the various hydrolyzed hydrophilic collagen products, etc. The hydrophilic lenses are water-insoluble, water-swellable, and when immersed in water or saline solution swell to attain their final dimensions. The resulting water-swollen lenses may be properly termed hydrogel lenses.

The following examples are further illustrative for the present invention using the molding apparatus as illustrated in Figure 2. It will be appreciated that various polymerizable mixtures suitable for fabricating contact lenses and adjustment procedures, either to the female mold portion, as below, the male mold portion, or both, may be used. Unless otherwise indicated all parts and percentages are by weight.

Example 1

A. A hydrophilic contact lens having a toric front surface was prepared using a lens mold of polypropylene of the type described and illustrated in U.S. Patent No. 4,121,896, issued October 24, 1978 except that the internal diameter of cylindrical support segment 12 of female mold member 4 is somewhat larger than the external diameter of support segment 7 of male mold member 2 to properly accommodate the angle $\theta$ as desires; see Figure 2. The material used was composed substantially of 2-hydroxyethyl methacrylate (HEMA), and due to the fact that the resulting polymer of HEMA swells in water or a physiologic solution by a factor of say 1.2, the wet lens that results is lesser in power by a factor of approximately 69%. The female mold selected had an optical curve spherical radius of 7.56 mm, and a base curve radius of 7.08 mm, and a diameter of 10.8 mm.

After selecting the proper mold sizes the torque ring was placed over the flexible female optical curve mold member and the adjustment screws tightened only to the point of contact with the mold. Next the assembly was placed in a Keratometer and the screws adjusted to flex the mold to have the desired radii, which in the present instance was a horizontal radius (major) of 7.63 mm and a vertical radius (minor) of 7.48 mm. The two torque screws were tightened evenly until the desired radii were observed.

Having thus adjusted the flexible female mold member, the assembly was removed from the Keratometer and charged with 1 ml. of a lens-forming mixture having the following ingredients:

| Component | Part by weight |
|---|---|
| 2-hydroxyethyl methacrylate | 98.3 |
| diethylene glycol monomethacrylate | 0.8 |
| ethylene glycol dimethacrylate | 0.4 |
| methacrylic acid in trace amounts plus other impurities | 0.5 |
| Percadox 16[a] | 1.0 |

[a]Bis (4-tert.butylcyclohexyl)peroxydicarbonate

Next the male base curve mold member with a radius of 7.08 mm was inserted into the adjusted, charged female optical curve mold member at an angle $\theta$ of 3°. That is to say, the principal longitudinal axis of curvature of the male member, inserted so as to be perpendicular to the major axis (meridian) on the resulting female toric molding surface, formed with the principal longitudinal axis of curvature of the female member an angle $\theta$ equal to 3°. The flexible rim portion of the male member and the optical surfaces of both the male and female member enclose and bound the lens-forming mixture. The male mold member was maintained in a fixed position of "tilt", i.e., angle $\theta$ of 3°, by means not shown in Figure 2. The inserted male mole member forced out a small amount of the lens-forming mixture as well as any bubbles from the mold system. The mold system was placed in a circulating air over at 105° for approximately 30 minutes to polymerize the monomer. After polymerization and cooling, the mold members were separated and a hard, dry lens removed. The lens edge was buffered to remove any slight roughness. The finished contact lens was placed in a physiological solution. As measured on a Nikon Vertexometer, the lens had a major power (wet) of −4.50, a minor power (wet) of −3.50, a cylinder of −1.00, a toric front surface, and prism ballast of 0.5 diopter which insures significant positional stability when placed in the eye of the wearer.

B. Example 1A is repeat except that the female mold selected had an optical curve spherical radius of 7.35 mm. The finished contact lens was placed in a physiological solution. As measured on a Nikon Vertexometer, the lens had a major power (wet) of −1.50, a minor power (wet) of −0.50, a cylinder of −1.00, a toric front surface, and prism ballast of 0.5 diopter which insures significant positional stability when placed in the eye of the wearer.

Examples 2—5

Example 1A was repeated except the angle $\theta$ was varied from 4° to 6°. The results are set forth in Table I below.

TABLE I

| Example number | Angle $\theta$ | Prism (diopters) | POWER (wet) | | |
|---|---|---|---|---|---|
| | | | Major | Minor | Cylinder |
| 2 | 4 | 0.75 | −4.50 | −3.25 | −1.25 |
| 3 | 5 | 1.00 | −5.00 | −6.00 | −1.00 |
| 4 | 5.5 | 1.25 | −5.00 | −4.00 | −1.00 |
| 5 | 6.0 | 1.50 | −3.50 | −1.75 | −1.75 |

The resulting toric contact lenses when placed in the eye of the wearer exhibited significant positional stability.

Examples 6—9

Example 1B was repeated except the angle $\theta$ was varied from 4° to 6°. The results are set forth in Table II below.

7

# 0 051 027

TABLE II

| Example number | Angle θ | Prism (diopters) | POWER (wet) | | |
|---|---|---|---|---|---|
| | | | Major | Minor | Cylinder |
| 6 | 4 | 0.75 | −5.00 | −3.25 | −1.75 |
| 7 | 5 | 1.00 | −2.50 | −1.25 | −1.25 |
| 8 | 5.5 | 1.25 | −5.25 | −4.00 | −1.25 |
| 9 | 6.0 | 1.50 | −5.25 | −4.00 | −1.25 |

The resulting toric contact lenses when placed in the eye of the wearer exhibited significant positional stability.

Example 10

Examples 2—5 are repeated except the following polymerizable mixture is used:

| Component | Parts by weight |
|---|---|
| 2-hydroxyethyl methacrylate | 65 |
| N,N-dimethylacrylamide | 35 |
| Water, distilled | 30 |
| diethylene glycol dimethyl ether | 20 |
| methylene-bis-acrylamide | 0.3 |
| diisopropyl percarbonate | 0.3 |

After equilibration, the resulting toric lenses are substantially similar to those obtained in Examples 2—5 with respect to power and prism ballast. These lenses are characterized by significant positional stability when worn for customary periods of time.

Example 11

The general procedure of Example 6 is repeated using a two-part room temperature vulcanizable transparent methyl silicone liquid which is mixed prior to adding 0.5 cc of the resulting mixture into the receiving mold member. The male support segment is inserted displacing excess vulcanizable liquid. The two mold members are lightly pressed together to insure seating and perhaps some flexing of the flexible rim on the opposite molding surface. The mold system is placed in a circulating air oven at 140°C for 2.5 hours. After cooling, the mold is opened. There is obtained a lens with a toric front surface exhibiting cylinder and prism ballast as indicated in the previous Examples.

Monomer, prepolymer or vulcanizable mixtures particularly useful in the practice of this invention include hydrophobic acrylic esters, suitably lower alkyl acrylic esters, the alkyl moiety containing 1—5 carbon atoms, such as methyl acrylate or methacrylate, ethyl acrylate or methacrylate, n-propyl acrylate or methacrylate, isopropyl acrylate or methacrylate, isobutyl acrylate or methacrylate, n-butyl acrylate or methacrylate, or various mixtures of these monomers. For increased dimensional stability and resistance to warpage the above monomers or monomer mixtures may be further admixed with a minor proportion of di- or polyfunctional polymerizable species to cause cross linking of the polymeric matrix as polymerization proceeds. Examples of such di- or polyfunctional species include: divinylbenzene, ethylene glycol diacrylate or methacrylate, propylene glycol diacrylate or methacrylate, and the acrylate or methacrylate esters of the following polyols: triethanol amine, glycerol, pentaerythritol, butylene glycol, diethylene glycol, triethylene glycol, tetraethylene glycol, mannitol, sorbitol and the like. Other cross linking monomers may include N,N-methylene-bis-acrylamide or methacrylamide, sulfonate divinylbenzene, and divinyl sulfone.

Further, the above monomers or mixtures thereof may be further mixed with linear polymeric species which are soluble therein as long as the viscosity of the solution or "casting syrup" formed thereby does not become sufficiently great that difficulty in removing bubbles therefrom is encountered.

Other monomeric materials suitable for producing lenses via this invention are hydrophilic monomer mixtures forming three dimensional cross linked networks such as those disclosed in U.S. 3,822,089. Illustrative hydrophilic monomers include water soluble monoesters of an acrylic acid or methacrylic acid with an alcohol having an esterifiable hydroxyl group and at least one additional hydroxyl group such as

8

**0 051 027**

the mono- and polyalkylene glycol monoesters of methacrylic acid and acrylic acid, e.g., ethylene glycol monomethyacrylate, ethylene glycol monoacrylate, diethylene glycol monomethacrylate, diethylene glycol monoacrylate, propylene glycol monomethylate, dipropylene glycol monoacrylate, and the like; the N-alkyl and N,N-dialkyl substituted acrylamides and methacrylamides such as N-methylacrylamide, N,N-dimethylacrylamide, N-methylmethacrylamide N,N-dimethylmethacrylamide, and the like; N-vinylpyrrolidone; the alkyl substituted N-vinyl pyrrolidones, e.g., methyl-substituted N-vinylpyrrollidone; glycidyl methacrylate; glycidyl acrylate; and others known to the art. Also useful are the alkyl ether acrylates and methacrylates and the vulcanizable silicone fluids or elastomers. The alkyl moieties which are especially suitable in the aforementioned compounds are those which contain from 1 to 5 carbon atoms therein.

With the hydrophilic monomer or mixtures thereof, it is preferred that a 3-dimensional cross linked network be formed. For this purpose it is desirable to employ small amounts of crosslinking monomers such as those illustrated above with respect to the discussion on hydrophobic acrylic esters or other cross-linking technique, e.g., radiation.

Preferred monomeric mixtures contain at least one alkylene glycol monoester of methacrylic acid, especially ethylene glycol monomethacrylate, and at least one crosslinking monomer such as the alkylene glycol diester of methacrylic acid, especially ethylene glycol dimethacrylate. Such mixtures may contain other polymerizable monomers, desirably in minor amounts such as N-vinylpyrrolidone, methyl methacrylate, acrylamide, N-methacrylamide, diethylene glycol monomethacrylate, and others illustrated above.

The polymerization reaction can be carried out in bulk or with an inert solvent. Suitable solvents include water; organic solvents such as water-soluble lower aliphatic monohydric alcohols as well as polyhydric alcohols, e.g., glycol, glycerol, dioxane, etc.; and mixtures thereof. In general, the solvent, if employed, can comprise a minor amount of the reaction medium, i.e., less than about 50 weight percent.

Polymerization of monomer mixtures is usually carried out with free radical catalysts of the type in common use in vinyl polymerization. Such catalyst species include organic peroxides, percarbonates, hydrogen peroxides, and inorganic materials such as ammonium, sodium, or potassium persulfate. Polymerization using such catalysts may occur at temperatures between ambient temperature—i.e., ca 20°C and about 120°C—depending on the speed of polymerization desired.

Polymerization may also occur between monomer or prepolymer mixtures under the influence of elevated temperatures or radiation (U.V., X-ray, or other well-known forms of radioactivity).

With silicone elastomers, vulcanization may take place via a free radical curing mechanism, or, in the case of two part so called RTV compounds vulcanization may occur through displacement or condensation reactions. Patents which further illustrate lens-forming materials useful in the preparation of contact lenses include, by way of example, U.S. Re 27,401; 3,639,524; 3,699,089; 3,700,761; 3,822,089; 4,121,896; 4,208,365; and 4,223,984; the full disclosures of which are incorporated by reference as if set out in full text.

**Claims**

1. A process for producing a contact lens (24) having a front convex optical surface and a back concave optical surface, one of said optical surfaces being a toric optical surface, and prism ballast, in a mold assembly comprised of a first mold portion (4) including a hollow cylindrical portion (12) with an open upper end and a closed lower end in the shape of a concave optical molding surface (16) and a second mold portion (2) including a cylindrical portion (7) terminating in a convex optical molding surface (10) and whose cross-sectional outer diameter is substantially smaller than the internal diameter of the said hollow cylindrical portion (12), one of said optical molding surfaces being a toric optical molding surface; each of said molding surfaces having a principal longitudinal axis of curvature (y, y′) which process comprises charging a contact lens-forming material on to the molding surface (16) of said first mold portion (4), closing the mold assembly by positioning said second mold portion (2) in touching and lens-forming relationship with said first mold portion (4) and subjecting said lens-forming material to activating conditions for a period of time sufficient to produce said contact lens (24), characterized in that said second mold portion (2) and said first mold portion (4) in such lens-forming relationship are adjusted to form an angle θ of about 2 degrees to about 8 degrees, said angle θ being defined by the principal longitudinal axis of curvature (y, y′) of said first molding surface and said second molding surface, thereby producing a toric contact lens (24) which exhibits cylinder power and prism ballast.

2. The process of claim 1 wherein said toric contact lens (24) is hydrophilic.

3. The process of claim 1 wherein said toric contact lens (24) is hydrophobic.

4. The process of claim 2 wherein said toric contact lens (24) is a polymer of 2-hydroxyethyl methacrylate.

5. The process according to claims 1—4 wherein external pressure is applied to the closed mold assembly (2, 4) during said activating conditions.

6. A contact lens mold assembly for casting toric contact lenses (24) possessing significant cylinder power, which comprises (i) a male mold portion (2) including a substantially cylindrical support portion (7) and a convex molding surface (10) having a principal longitudinal axis (y′), said convex molding surface (10) having a predetermined curvature to form a concave optical surface of said desired contact lens; (ii) a female mold portion (4) including a concave molding surface (16) having a principal longitudinal axis (y),

9

said female molding surface having a predetermined curvature to form a convex optical surface of said desired contact lens, said female portion (4) comprising a hollow cylindrical portion (12) having an open upper end and a closed lower end for receiving the cylindrical portion (7) of said male mold portion (2); (iii) said male mold portion (2) and/or said female mold portion (4) being flexible and constructed of thermoplastic material; (iv) the cross-sectional outer diameter of the cylindrical support portion (7) of said male mold portion (2) being substantially smaller than the internal diameter of the hollow cylindrical portion (12) of said female mold portion (4); (v) adjustment means operatively associated and in contact with a flexible, thermoplastic mold portion for flexing the optical surface thereof and imparting a predetermined toric surface thereto; characterized in that means (23) are provided to maintain said male mold portion (2) and said female mold portion (4) in a fixed positional relationship at an angle θ, said angle θ being of about 2 degrees to about 8 degrees and being the angle formed by the principal longitudinal axes (y, y') of said male (2) mold portion and said female mold portion (4).

7. The contact lens mold assembly of claim 6 which is characterized by means to maintain external pressure to the closed mold assembly during the casting of the toric lens.

8. The contact lens mold assembly of claims 6 and 7 wherein said adjustment means comprise means (18) to impinge and distort the outer hollow cylindrical portion of the said female mold portion (4) to impart toricity to its molding surface (16).

**Patentansprüche**

1. Verfahren zum Herstellen einer Kontaktlinse (24) mit einer konvexen optischen Vorderfläche und einer konkaven optischen Rückfläche, wobei eine der optischen Flächen eine torische optische Fläche ist, und mit Prismenballast, in einem Formwerkzeug aus einer ersten Werkzeughälfte (4) mit einem hohlzylindrischen Abschnitt (12), der ein offenes Oberende und ein geschlossenes Unterende in Form einer konkaven optischen Formpreßfläche (16) aufweist, und einer zweiten Werkzeughälfte (2) mit einem Zylinderabschnitt (7), der in einer konvexen optischen Formpreßfläche (10) endet und dessen Querschnitts-Außendurchmesser erheblich kleiner als der Innendurchmesser des hohlzylindrischen Abschnitts (12) ist, wobei eine der optischen Formpreßflächen eine torische optische Formpreßfläche ist, und wobei jede Formpreßfläche eine optische Krümmungsachse (y, y') in Längsrichtung hat, wobei bei der Verfahren ein kontaktlinsenbildender Werkstoff auf die Formpreßfläche (16) der ersten Werkzeughälfte (4) aufgegeben wird, das Formwerkzeug geschlossen wird, indem die zweite Werkzeughälfte (2) in linsenbildenden Kontakt mit der ersten Werkzeughälfte (4) gebracht wird, und der linsenbildende Werkstoff während einer für die Herstellung der Kontaktlinse (24) ausreichenden Zeit aktivierenden Bedingungen unterworfen wird, dadurch gekennzeichnet, daß die zweite Werkzeughälfte (2) und die erste Werkzeughälfte (4), die sich in dieser linsenbildenden Stellung befinden, so eingestellt werden, daß ein Winkel θ von ca. 2° bis ca. 8° gebildet wird, wboei der Winkel θ durch die optische Krümmungsachsen (y, y') in Längsrichtung der ersten Formpreßfläche und der zweiten Formpreßfläche definiert ist, so daß eine torische Kontaktlinse (24) mit zylindrischer Wirkung und prismatischem Ballast hergestellt wird.

2. Verfahren nach Anspruch 1, wobei die torische Kontaktlinse (24) hydrophil ist.

3. Verfahren nach Anspruch 1, wobei die torische Kontaktlinse (24) hydrophob ist.

4. Verfahren nach Anspruch 2, wobei die torsiche Kontaktlinse (24) ein 2-Hydroxyethylmethacrylat-Polymer ist.

5. Verfahren nach den Ansprüche 1—4, wobei unter den aktivierenden Bedingungen das geschlossene Formwerkzeug (2, 4) mit Druck beaufschlagt wird.

6. Kontaktlinsen-Formwerkzeug zum Gießen torischer Kontaktlinsen (24) mit erheblicher zylindrischer Wirkung, mit (i) einem Formoberteil (2), das einen zylindrischen Stützteil (7) und eine konvexe Formpreßfläche (10) mit einer optischen Längsachse (y') aufweist, wobei die konvexe Formpreßfläche (10) eine vorbestimmte Krümmung zur Bildung einer konkaven optischen Fläche der gewünschten Kontaktlinse, hat; (ii) einem Formunterteil (4), das eine konkave Formpreßfläche (16) mit einer optischen Längsachse (y) aufweist, wobei die Formpreßfläche des Formunterteils eine vorbestimmte Krümmung zur Bildung einer konvexen optischen Fläche der gewünschten Kontaktlinse hat und das Formunterteil (4) einen hohlzylindrischen Abschnitt (12) mit einem offenen Oberende und einem geschlossenen Unterende zur Aufnahme des zylindrischen Teils (7) des Formoberteils (2) aufweist; (iii) wobei das Formoberteil (2) und/oder das Formunterteil (4) flexibel ist und aus thermoplastischem Werkstoff besteht; (iv) wobei der Querschnitts-Außendurchmesser des zylindrischen Stützteils (7) des Formoberteils (2) erheblich kleiner als der Innendurchmesser des hohlzylindrischen Abschnitts (12) des Formunterteils (4) ist; (v) mit Einstellmitteln, die einem flexiblen thermoplastischen Formwerkzeugabschnitt wirksam zugeordnet sind, um dessen optische Fläche durchzubiegen und ihm eine vorbestimmte torische Fläche zu geben, dadurch gekennzeichnet, daß Mittel (23) vorgesehen sind, um das Formoberteil (2) und das Formunterteil (4) in einer unveränderlichen Lage zueinander unter einem Winkel θ zu halten, wobei der Winkel θ ca. 2° bis ca. 8° beträgt und der durch die optischen Längsachsen (y', y) des Formoberteils (2) und des Formunterteils (4) gebildete Winkel ist.

7. Kontaktlinsen-Formwerkzeug nach Anspruch 6, gekennzeichnet durch Mittel zum Aufrechterhalten von äußerem Druck auf das geschlossene Formwerkzeug während des Gießens der torischen Linse.

8. Kontaktlinsen-Formwerkzeug nach den Ansprüchen 6 und 7, wobei die Einstellmittel ein Organ (18)

# 0 051 027

aufweisen, das den äußeren hohlzylindrischen Abschnitt des Formunterteils (4) kontaktiert und verformt, so daß seine Formpreßfläche (16) torisch gemacht wird.

## Revendications

1. Procédé pour la production d'une lentille de contact (24) ayant une surface optique avant convexe et une surface optique arrière concave, l'une desdites surfaces optiques étant une surface optique torique, et un lest en prisme en un ensemble de moule composé d'une première partie de moule (4) comprenant une partie cylindrique creuse (12) avec une extrémité supérieure ouverte et une extrémité inférieure fermée sous la forme d'une surface de moulage optique concave (16) et une seconde partie de moule (2) comprenant une partie cylindrique (7) qui se termine en une surface de moulage optique convexe (10) et dont le diamètre extérieur de la coupe transversale est notablement plus petit que le diamère intérieur de ladite partie cylindrique creuse (12), l'une desdites surfaces de moulage optiques étant une surface de moulage optique torique, chacune desdites surfaces de moulage ayant un axe longitudinal principal de courbure (y, y'), ce procédé comprenant le chargement d'une matière de formation d'une lentille de contact sur la surface de moulage (16) de ladite première partie de moule (4), la fermeture de l'ensemble de moule par mise en place de ladite seconde partie de moule (2) en contact et en position de formation de lentille par rapport à ladite première partie de moule (4) et l'application à ladite matière de formation de lentille de conditions d'activation pour une durée suffisante pour produire ladite lentille de contact (24), caractérisé en ce que ladite seconde partie de moule (2) et la dite première partie de moule (4) dans ces positions relatives de formation de la lentile sont réglées pour former un angle θ allant d'environ 2 degrés jusqu'à environ 8 degrés, ledit angle θ étant déterminé par l'axe longitudinal principal de courbure (y, y') de ladite première surface de moulage et de ladite seconde surface de moulage, en produisant ainsi une lentille de contact torique (24) qui présente une puissance de cylindre et un lest en prisme.

2. Procédé selon la revendication 1, dans lequel la dite lentile de contact torique (24) est hydrophile.

3. Procédé selon la revendication 1, dans lequel la dite lentile de contact torique (24) est hydrophobe.

4. Procédé selon la revendication 2, dans lequel ladite lentile de contact torique (24) est en un polymère de méthacrylate d'hydroxyéthyle-2.

5. Procédé selon les revendications 1—4, dans lequel la pression extérieure est appliquée à l'ensemble de moule fermé (2, 4) pendant l'application desdites conditions d'activation.

6. Ensemble de moule de lentille de contact pour mouler des lentilles de contact toriques (24) possédant une puissaance de cylindre notable qui comprend (I) une partie de moule mâle (2) comportant une partie de support pratiquement cylindrique (7) et une surface de moulage convexe (10) ayant un axe longitudinal principal (y'), ladite surface de moulage convexe (10) ayant une courbure prédéterminée pour former une surface optique concave de ladite lentille de contact désirée; (II) une partie de moule femelle (4) comprenant une surface de moulage concave (16) ayant un axe longitudinal principal (y), ladite surface de moulage femelle ayant une courbure prédéterminée pour former une surface optique convexe de ladite lentille de contact désirée, ladite partie femelle (4) comprenant une partie cylindrique creuse (12) ayant une extrémité supérieure ouverte et une extrémité inférieure fermée pour recevoir la partie cylindrique (7) de ladite partie de moule mâle (2); (III) ladite partie de moule mâle (2) et/ou ladite partie de mould femelle (4) étant flexibles et constituées en matière thermoplastique; (IV) le diamètre extérieur de la section transversale de la partie de support cylindrique (7) de ladite partie de moule mâle (2) étant notablement plus petit que le diamètre intérieur de la partie cylindrique creuse (12) de la dite partie de moule femelle (4); (V) un moyen de réglage associé fonctionnellement et en contact avec une partie de moule thermoplastique pour faire fléchir la surface optique et établir sur elle une surface torique prédéterminée, caractérisé en ce qu'un moyen (23) est prévu pour maintenir ladite partie de moule mâle (2) et ladite partie de moule femelle (4) dans des positions relatives fixes à un angle θ; ledit angle θ allant d'environ 2 degrés à environ 3 degrés et étant l'angle formé par les axes longitudinaux principaux (y', y) de ladite partie de moule mâle (2) et de ladite partie de moule femelle (4).

7. Ensemble de moule de lentille de contact selon la revendication 6, caractérisé par un moyen pour maintenir la pression extérieure appliquée à l'ensemble de moule fermé pendant la coulée de la lentille torique.

8. Ensemble de moule de lentille de contact selon la revendication 6 ou la revendication 7, dans lequel ledit moyen de réglage comprend un moyen (18) pour presser et déformer la partie cylindrique creuse extérieure de la dite partie de moule femelle (4) pour donner une forme torique à sa surface de moulage (16).

11

*Fig. 1.*

*Fig. 2.*

*Fig.3.*

*Fig.4.*

*Fig.7.*

*Fig.8.*

0 051 027

Fig.5.

Fig.6.

Fig.9.

3